# EUROPEAN PATENT SPECIFICATION

(11) **EP 0 990 096 B1**
(45) Date of publication and mention of the grant of the patent: **13.04.2005**
(21) Application number: 98921667.6
(22) Date of filing: 28.05.1998
(51) Int. Cl.: F16F 15/32, F16F 15/34

(54) **WHEEL-WEIGHT FOR BALANCING VEHICLE WHEEL**
RADGEWICHT ZUR AUSWUCHTUNG VON FAHRZEUGRÄDERN
POIDS SUR LA ROUE PERMETTANT D'EQUILIBRER LA ROUE D'UN VEHICULE

(30) Priority: 27.06.1997 HU 1100006
(43) Date of publication of application: 05.04.2000
(73) Proprietor: Polyvas, Istvan, 1025 Budapest (HU)
(72) Inventor: Polyvas, Istvan, 1025 Budapest (HU)
(74) Representative: Hofstetter, Alfons J., Dr.rer.nat.
(86) International application number: PCT/HU1998/000036
(87) International publication number: WO 1999/000609

(56) References cited:
- DE-A- 1 816 669
- DE-A- 3 637 256
- US-A- 5 151 325
- US-A- 5 564 791
- US-A- 5 564 792

## Description

The present invention discloses a wheel-weight to be mounted on a vehicle wheel to balance it and possessing a rigid body and a joining surface on the rigid body that can be fitted to a surface of a wheel rim.

It is well known that the primary consideration when forming wheel-weights for balancing vehicle wheels is that the wheel-weight is to be mounted point-like on the wheel rim and in a way that it is not visible.

Accordingly, the material of the wheel-weight is chosen in a way that the largest weight should be concentrated in the smallest possible volume, and the shape of the wheel-weight is chosen to fit tight to the wheel rim as much as possible so that it is difficult to notice it.

In order to meet these requirements the material of the wheel-weights is chosen to be heavy metal, usually lead or some alloy of high lead content, as it is described e.g. in USA patent specification No. 4.300.803. One type of wheel-weight, to be used with wheel rims made from either steel plate or light metal alloy, usually aluminium alloy, are box shaped with relatively small height, having a rectangle shaped base surface as a joining surface and can be stick by adhesive on the inner surface of the wheel rim facing the axle, as one of them is described in USA patent specification No. 3.960.409.

The other type of 'wheel-weight frequently used in case of wheel rims made from steel plate are crescent-shaped and fitted into the groove near the rim of the wheel rim, the joining surface of the wheel-weight is curved both in the longitudinal and the transversal directions following the arc of the rim and the profile of the groove and can be fixed to the rim via sticking or with elastic clips or springs. This kind of wheel-weights are described e.g. in German patent specification No. 1.816.669 and U.S. patent specifications No. 2.548.842, 3.890.008 and 4.300.803. In all these cases the text-surface containing the data relating to the wheel-weight is formed on the surface of the body of the wheel-weight reverse to the joining surface.

DE-A-3 637 256 discloses a rotor as part of a piece of equipment comprising a rotor body connected rigidly to a shaft. The rotor body is manufactured from ceramic and can be balanced. Balancing is accomplished by attaching or removing balance weights to the rotor body. Therefore the rotor body has cut-outs for the fitting of balance weights and furthermore has integrally formed balance weights which can be removed, at least in part. US-A-5 151 325 discloses ceramic turbine wheels which are balanced to minimize rotational vibrations by bonding silica-based glass pads to the wheel. The pads are formed from a mixture of sodium silicate, water and a fine ceramic powder, preferably of a composition similar to the underlying ceramic turbine wheel. The weighted pads are machined, without damage to the underlying ceramic wheel, to achieve proper balance.

The above mentioned wheel-weights have several disadvantages.

Primarily, as a consequence of the material they are made of, they have damaging effect. Both the deleterious lead smoke released in the course of the manufacturing process, and the pieces eventually falling down from the wheel and remaining in the environment as they are not collected, are harmful for the health and pollute the environment. A further disadvantage is that considering the modern, elegant car bodies of passenger cars and trucks of characteristic design the wheel-weights mounted on the wheel do not match to their environment, they are unaesthetic and disturbing.

Because of the above disadvantages it is the object of the invention to develop a wheel-weight which, while standing all demands, is not harmful for the health and does not pollute the environment either in the course of its manufacture or during its usage or when it is lost in the environment as a waste.

This object is solved by a wheel-weight having the features described in claim 1.

Advantageous developments are described in the dependent claims.

The fundamental idea of the invention is that instead of the practice of applying the largest weight concentrated in the smallest possible volume, the wheel-weight of the desired weight can be realised even if it is made of some appropriate material other than lead. As a result of the fact that the material of the wheel-weight is different from lead, the wheel-weight has a plenty of advantages compensating for the larger volume. The wheel-weight according to the invention comprises a rigid body which is made of glass.

The shape of the wheel-weight according to the invention is the known box shape with rounded edges and corners, or crescent shape, or other, e.g. a shape similar to the egg like shape of a prolate ellipsoid, or a symmetrical pebble, or a shape chosen to meet the actual demand and requirement. An extended surface of these forms is the joining surface.

The other surfaces of the wheel-weight are indifferent, favourably determined by the manufacturing method.

In the course of manufacturing the wheel-weight made of glass the usual components such as silicon dioxide, components containing sodium silicate and/or calcium silicate, or some metal silicate components replacing partly or entirely any or several of these components, and further components if required, are melt on the usual way, the resulting melt is formed to the shape of the wheel-weight and cooled in stress-free circumstances. The joining surface of the wheel-weight is formed with the open or closed moulding tool, whereas the other surfaces are determined by the moulding tool in case if using a closed moulding tool, while in case of using an open moulding tool the other surfaces are natural surfaces formed in the course of the solidification determined by the internal viscosity and the cooling rate.

The rigid body of the wheel-weight made of glass can be transparent or coloured, its colour can be chosen on demand, preferably chosen to match the colour of the vehicle wheel, it may be unicoloured, multicoloured or transparent, there may be patterns on it, preferably coloured longitudinal lines or concentric circles. The desired colour is preferably ensured by mixing the appropriate colouring agent to the basic components.

The wheel-weight according to the invention can be fashioned to be fixed via sticking.

The joining surface of this embodiment is supplied with an adhesive layer.

The adhesive layer of the wheel-weight is an adhesive material suitable for sticking glass to painted metal surfaces, e.g. some acrilate derivatives. At one embodiment of the wheel-weight the adhesive material is applied to two sides of a base sheet, this base sheet is mounted on the joining surface via the adhesive layer on the one side, the adhesive layer on the other side is used for fixing the wheel-weight on the wheel rim when applying the wheel-weight.

The adhesive layer on the other side is conveniently covered with a protecting sheet or protecting paper, which sheet or paper is removed before using the wheel-weight. At an other embodiment the adhesive material is applied to the joining surface as one layer, or it is applied to the joining surface when the wheel-weight is used.

The wheel-weight can be fixed with liquid adhesive material as well, in this case the joining surface is covered with the adhesive material just before using the wheel-weight.

The wheel-weight according to the invention can be fixed with the usual elastic clips or springs as well. This way of fixing is especially preferable in case of the crescent-shaped wheel-weight, the joining surface of which is suitable to be fixed in the groove of the rim flange of the wheel rim. These embodiments appropriately possess a clip positioning surface on the surface reverse to the joining surface.

The positioning surface is appropriately the surface of a hollow fashioned in order to direct the clip, or the surface of the nest fixing the end of the clip.

When mounting the wheel-weight on the wheel rim the wheel-weight is fitted into the groove formed by the bent end of the rim of the wheel rim, and the clip, pressed to the outer surface of the rim, is pushed over the wheel-weight in a way that it fixes the wheel-weight elastically in the groove.

At a further preferable embodiment of the wheel-weight according to the invention the surface of the wheel-weight is a micro-roughened surface. The micro-roughened surface is properly prepared via pickling it with acid or via sand-blasting. This is favourable from the aesthetic point of view.

The wheel-weight according to the invention is now described in detail in connection with preferable implementation examples, with reference to the accompanying drawings in which:
Fig. 1 is the front broken-out section of the wheel with the wheel-weight according to the invention mounted on it,
Fig. 2 shows the plane section of the part of the wheel band shown on Figure 1 with the wheel-weight on it from the direction indicated on Figure 1,
Fig. 3 is the lateral view of a section of the wheel' disc with type one profile with the tyre on it and the wheel-weight mounted on it by using adhesive material,
Fig. 4 is the lateral view of a section of the wheel disc with type two profile, with the tyre on it and the wheel-weight of the appropriate shape for this profile mounted on it by using adhesive material,
Fig. 5 is the lateral view of a section of the wheel disc with type two profile, with the tyre on it and the wheel-weight fixed to its rim with a clip,
Fig. 6 is the front view of the middle part of the wheel-weight shown on Figure 5,
Fig. 7 is the perspective view of a wheel-weight fixable with elastic clip,
Fig. 8 is the perspective view of a wheel-weight fixable with adhesive,
Fig. 9 is the perspective view of an other type of wheel-weight fixable with adhesive, and
Fig. 10 is the perspective view of an further type of wheel-weight fixable with adhesive base sheet.

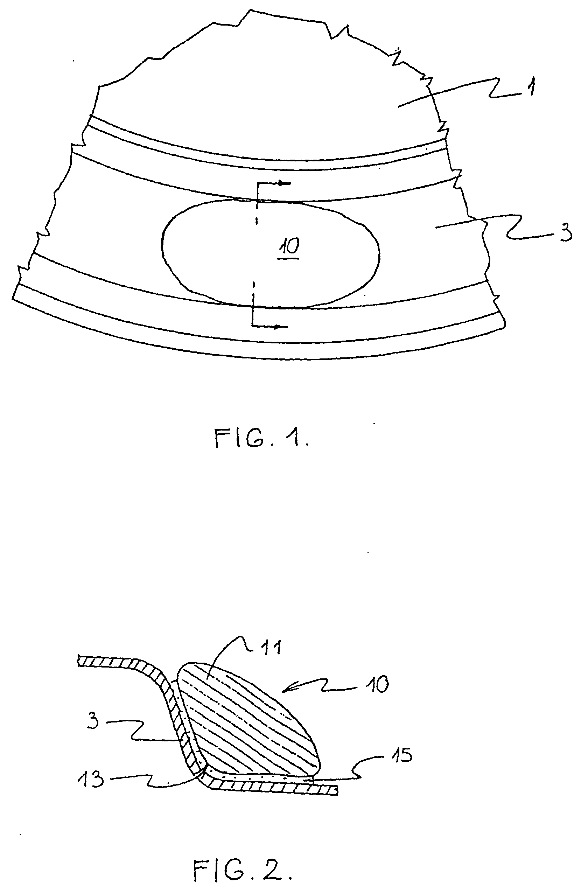

Figure 1 shows a part of a vehicle wheel carrying a wheel-weight (10). The vehicle wheel contains a wheel disc (1) and a wheel rim (3) forming one unit, the wheel-weight (10) is mounted on the inner side of the wheel rim (3) facing the axle. The wheel-weight (10) presented here has a shape similar to an ellipsoid.

Figure 2 shows the plane section of the wheel rim (3) with the wheel-weight (10) on it from the direction indicated on Figure 1. A "S" shape in the profile of the wheel rim (3) is clearly seen. A joining surface (13) is formed on the rigid body (11) of the wheel-weight (10), the joining surface (13) fits into the shoulder formed by the "S" shape of the profile of the wheel band (3). There is an adhesive layer (15) on the joining surface (13), sticking to the rigid body (11) and the wheel rim (3) the adhesive layer (15) fixes the wheel-weight.

The material of the wheel-weight (10) presented as an example is usual transparent glass made of sodium silicate, calcium silicate and silicon dioxide, or green coloured glass containing a small amount of iron oxide.

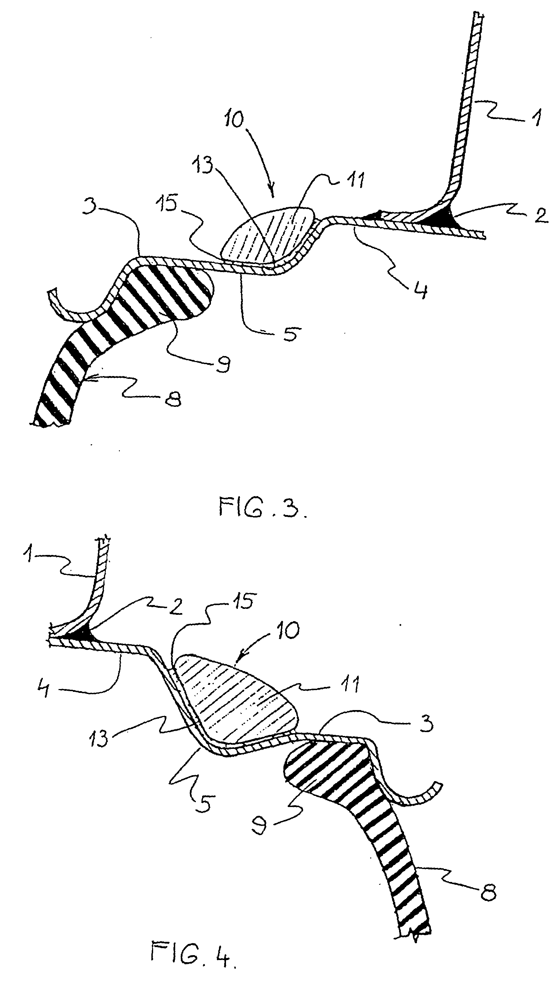

Figure 3 shows a part of the wheel rim (3) with the tyre and the wheel-weight (10) mounted on it. It is a plane section of the profile of the wheel rim (3) obtained by cutting the wheel band (3) with a plane fitting to the axis of rotation. A weld (2) fixing the wheel rim (3) to the wheel disc (1) is clearly seen. The rim-bed (4) of the wheel rim (3) joins to the band-shoulder (5) in a longish, first "S" shaped profile, the wheel-weight (10) is fixed to the inner side (in the radial sense) of the shoulder formed at the junction, while the thick edge (9) of the tyre (8) fits to the outer surface and the bent rim of the band-shoulder (5) near the edge of the wheel rim (3). The rigid body (11) of the wheel-weight (10) has a joining surface (13) fitting into the type one "S" profile, the joining surface (13) is supplied with adhesive layer (15). The wheel-weight (10) is fixed into the proper bend of the "S" profile of the wheel rim (3) with this adhesive layer (15).

Figure 4 shows a part of the wheel rim (3) of a second profile with the tyre (8) and the wheel-weight (10) mounted on it. At this embodiment the rim bed (4) and the rim shoulder (5) of the wheel rim (3) connected firmly to the wheel disc (1) in the weld (2) are connected to each other in a second "S" profile providing higher rigidity. The joining surface (13) of the rigid body (11) of the wheel-weight (10) is formed to fit into this type of profile, and it is fixed on the above mentioned way via the adhesive layer (15). The arrangement of thick edge (9) of the tyre (8) is also shown on the figure.

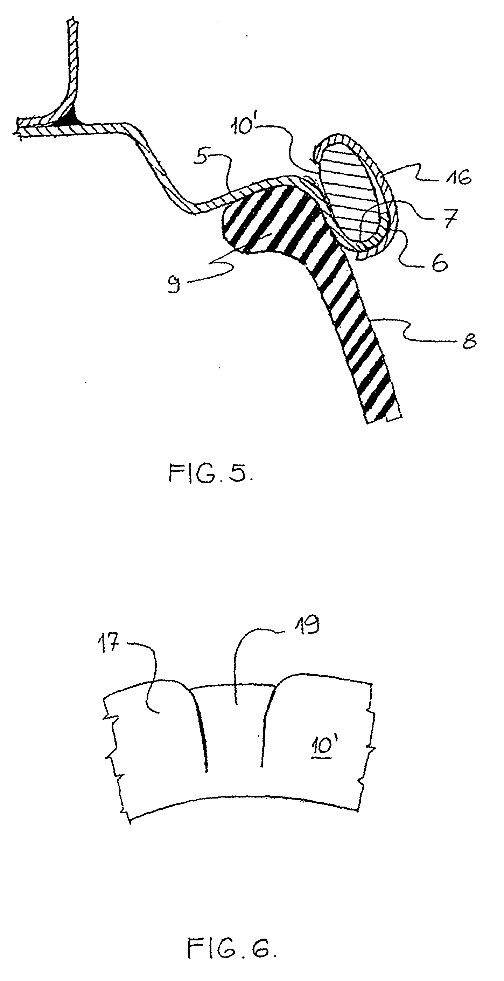

Figure 5 shows a part of the wheel rim of the second profile with the wheel-weight (10') mounted on it. The edge (6) of the rim shoulder (5) of the wheel rim (3) supporting the thick edge (9) of the tyre (8) is bent so that it forms a groove (7). The wheel-weight (10') of this implementation example is fixed in the groove (7) pressed in with the "C" shaped elastic clip (16).

Figure 6 shows a part of the upper surface (17) of the wheel-weight (10') mountable with a clip. This embodiment possesses a positioning surface (19) deepened in the upper surface (17), the width of the positioning surface (19) corresponds to the width of the clip (16), preventing the clip (16) from slipping sideways on the wheel-weight (10') in the closed position.

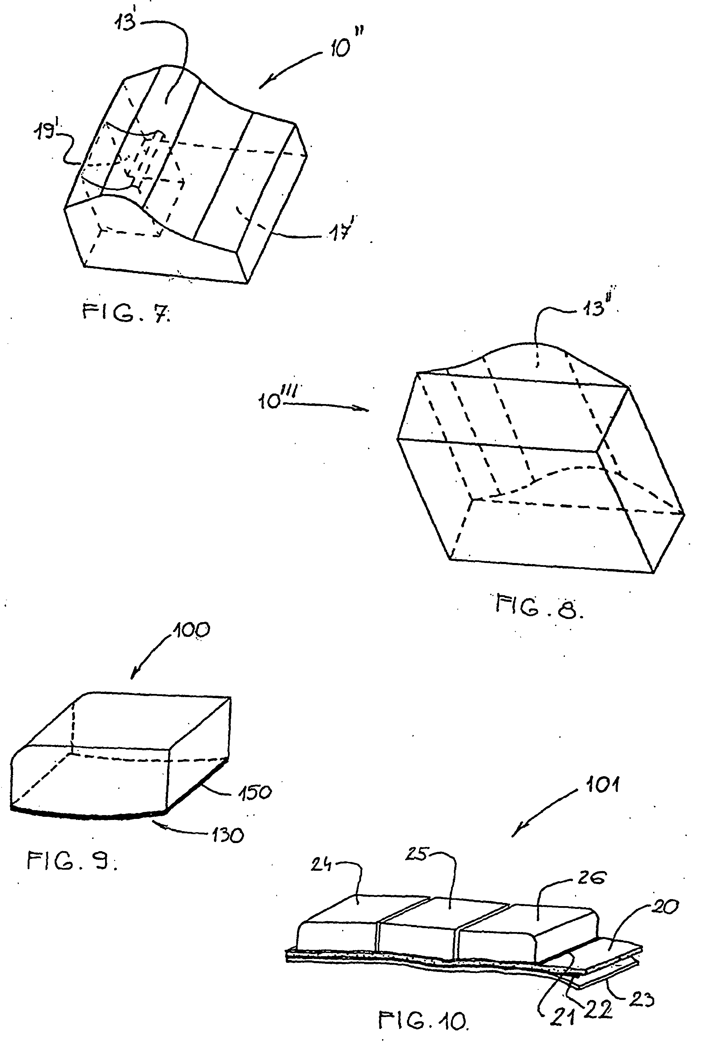

Figure 7 shows a perspective view of wheel-weight (10'') fixable with an elastic clip. The wheel-weight (10'') has a convexed joining surface (13') able to fit into the "S" profile of a wheel rim. There is the positioning surface (19') on the opposite side of the weight deepened in the upper surface (17').

Figure 8 shows a perspective view of a wheel-weight (10''') with convexed joining surface (13'') which is able to fit into the "S" profile of a wheel rim. The wheel-weight (10''') is fixable with adhesive which covers its joining surface (13'').

Figure 9 shows a perspective view of an other type of shape of wheel-weight (100). Its joining surface (130) is convexed and covered by an adhesive layer (150).

Figure 10 shows a'perspective view of a further type of a wheel-weight(101). The wheel-weight (101) having desired weight is assembled by unit wheel-weights (24,25,26) which are arranged in line and fixed by adhesive (21) on the upper side of base sheet (20) . On the other side of the base sheet (20) there is an adhesive layer (22) for fixing the wheel-weight. The adhesive layer (22) is covered with a removable sheet (23) to protect the adhesive.

The text surface containing the weight and other required data of the wheel-weight according to the invention can be formed on the surface of the wheel-weight reverse to the joining surface, and the text can be written on it via pickling, sand-blasting or painting.

The major advantage of the wheel-weights according to the invention is that owing to the material they are made of, they have no harmful effect on the health and no environment polluting effect either when'being manufactured, or when being used or when becoming waste.

They are essentially like, and they behave like the natural objects that can be found in nature. A further advantage is that they are aesthetic, the colour and the shape of them can be chosen to fit to the wheel disc, they are appropriate to call attention as well, and they can also be applied as decoration. Another great advantage is that it is easy to clean them, they do not corrode, and do not enter into any chemical reactions with the materials that can be found on the wheel disc. A further advantage is, that as a consequence of its relatively large body standing out from the surface of the wheel disc it causes additional turbulence at the wheel disc when the car is moving, increasing this way the air cooling of the wheel disc and the tyre. As a result, the wear of the tyre will be smaller, and the overpressure in the tyre as a result of running hot will also be smaller, increasing safety. It is also an advantage that, as a consequence of the material they are made of, the manufacturing cost of these wheel-weights is lower than that of the traditional ones, and the traditional wheel-weights can be changed for the wheel weights according to the invention without any additional operation.

## Claims

1. Wheel-weight to be mounted on a vehicle wheel to balance it and possessing a rigid body (11) and a joining surface (13) on the rigid body (11) that can be fitted to a surface of a wheel rim (3),
**characterised in that**
the rigid body (11) is made of glass.

2. Wheel-weight according to claim 1,
**characterised in that**
there is an adhesive layer (15) on the joining surface (13).

3. Wheel-weight according to claim 1 or 2,
**characterised in that**
there is a clip positioning surface (19) on the surface reverse to the joining surface (13).

4. Wheel-weight according to claim 1 or 2,
**characterised in that**
the surface of it is matted via pickling with acid.

5. Wheel-weight according to claim 1 or 2,
**characterised in that**
the surface of it is matted via sand-blasting.

## Patentansprüche

1. Radgewicht, das an einem Fahrzeugrad montiert werden soll, um es auszuwuchten, und einen starren Körper (11) und eine Verbindungsfläche (13) am starren Körper (11) besitzt, die an eine Oberfläche einer Radfelge (3) angefügt werden kann,
**dadurch gekennzeichnet, daß**
der starre Körper (11) aus Glas besteht.

2. Radgewicht nach Anspruch 1,
**dadurch gekennzeichnet, daß**
eine Klebeschicht (15) auf der Verbindungsfläche (13) vorhanden ist.

3. Radgewicht nach Anspruch 1 oder 2,
**dadurch gekennzeichnet, daß**
eine Klemmenpositionierungsfläche (19) auf der zur Verbindungsfläche (13) entgegengesetzten Oberfläche vorhanden ist.

4. Radgewicht nach Anspruch 1 oder 2,
**dadurch gekennzeichnet, daß**
die Oberfläche desselben durch Beizen mit Säure mattiert wird.

5. Radgewicht nach Anspruch 1 oder 2,
**dadurch gekennzeichnet, daß**
die Oberfläche desselben durch Sandstrahlen mattiert wird.

## Revendications

1. Poids de roue prévue d'être montée sur une roue de véhicule pour équilibrer celle-ci, présentant un corps rigide (11) et une surface de jonction (13) sur le corps rigide (11) susceptible d'être montée sur une surface d'un bord (3) de roue,
**caractérisée en ce que**
le corps rigide (11) est réalisé en verre.

2. Poids de roue selon la revendication 1,
**caractérisée en ce que**
sur la surface de jonction (13), une couche adhésive (15) est appliquée.

3. Poids de roue selon la revendication 1 ou 2,
**caractérisée en ce que**
sur la surface opposée à la surface de jonction (13), une couche de positionnement de clip (19) est prévue.

4. Poids de roue selon la revendication 1 ou 2,
**caractérisée en ce que**
sa surface est rendue rugueuse grâce à un décapage à l'acide.

5. Poids de roue selon la revendication 1 ou 2,
**caractérisée en ce que**
a surface est rendue rugueuse grâce à un décapage au sable.
